# EUROPÄISCHE PATENTANMELDUNG

(11) **EP 1 168 760 A2**
(43) Veröffentlichungstag der Anmeldung: **02.01.2002**
(21) Anmeldenummer: 01115272.5
(22) Anmeldetag: 25.06.2001
(51) Int. Cl.: H04L 29/06

(54) **Verfahren zur Kommunikation zwischen zwei Netzwerken sowie Netzwerk**

(30) Priorität: 28.06.2000 DE 10030525
(71) Anmelder: BECKER GmbH, 76307 Karlsbad-Ittersbach (DE)
(72) Erfinder: Bähren, Frank, 76137 Karlsruhe (DE); Wietzke, Joachim, 76228 Karlsruhe (DE); Schöpp, Harald, 76275 Ettlingen (DE); Bischoff, Joachim, 75210 Keltern (DE); Lappe, Dirk, 76228 Karlsruhe (DE)
(74) Vertreter: Patentanwälte Westphal, Mussgnug & Partner

(57) **Zusammenfassung**

Um den Aufwand bei der Kommunikation zwischen einem mehrere Einheiten (1 bis 10) miteinander vernetzenden ersten Netzwerk (M), z.B. ein in ein Kraftfahrzeug eingebautes MOST-Netzwerk, und einem zweiten Netzwerk (I), z.B. dem Internet, zu veringern, sind in einer der Einheiten (1) des ersten Netzwerkes (M) zentral für die restlichen Einheiten (2 bis 10) die Netzwerkschichten (IP) des zweiten Netzwerkes (I) sowie eine zugehörende Anwendungsschnittstelle (API), eine sogenannte API, implementiert, während in den restlichen Einheiten (2 bis 10) sogenannte Proxy-Rechner (P) installiert sind.

## Beschreibung

Die Erfindung betrifft ein Verfahren zur Kommunikation zwischen einem mehrere Einheiten miteinander vernetzenden ersten Netzwerk und einem zweiten Netzwerk.

Die Erfindung betrifft weiter ein Netzwerk, das mehrere Einheiten miteinander vernetzt.

Mit dem neuesten Stand der Technik ausgestattete Kraftfahrzeuge, wie zum Beispiel PKW, LKW oder Omnibusse, sind mit einer Multimediaanlage ausgerüstet, die z.B. aus einem sogenannten ringförmigen MOST-Netzwerk aufgebaut ist, das mehrere Einheiten miteinander vernetzt, die je nach Bedarf als Datenquelle, Datensenke oder als Transceiver fungieren. MOST steht als Abkürzung für Media Oriented System Transport oder Media Oriented Synchronous Transfer.

So kann ein MOST-Netzwerk in einem Kraftfahrzeug beispielsweise einen Rundfunkempfänger, einen Fernsehempfänger, Bildschirme, einen CD-Spieler, einen DVD- oder CD-Wechsler, einen Cassettenrecorder, aktive Lautsprecher, eine Navigationsanlage, ein Autotelefon, ein schnurloses Telefon sowie Bedien- und Steuereinheiten miteinander vernetzen, um nur einige Beispiele für die Einheiten zu nennen.

Es ist weiterhin bekannt, in jeden Personalcomputer eines Netzwerkes die Netzwerkschichten eines zweiten Netzwerkes zu installieren. Bei den Netzwerkschichten handelt es sich z.B. um das Transmission Control Protocol mit der gebräuchlichen Abkürzung TCP und um das Internet Protocol, das im allgemeinen mit IP abgekürzt wird. Das zweite Netzwerk ist das Internet.

Wegen des hohen technischen Aufwandes ist ein derartig strukturiertes Netzwerk nicht zum Einbau in ein Kraftfahrzeug geeignet, weil in einem Kraftfahrzeug Platz und Energie nur in begrenztem Umfang zur Verfügung stehen.

Es ist daher Aufgabe der Erfindung, ein Verfahren zur Kommunikation zwischen einem ersten und einem zweiten Netzwerk sowie ein Netzwerk so zu gestalten, daß sich das erste Netzwerk infolge seines geringen technischen Aufwandes zum Einbau in ein Kraftfahrzeug eignet.

Verfahrensmäßig wird diese Aufgabe mit den Merkmalen des Anspruchs 1 dadurch gelöst, daß in einer der Einheiten des ersten Netzwerkes zentral für die restlichen Einheiten die Netzwerkschichten des zweiten Netzwerkes sowie eine zugehörende Anwendungsschnittstelle - eine sogenannte API - implementiert werden, während in den restlichen Einheiten sogenannte Proxy-Rechner installiert werden.

Vorrichtungsmäßig wird diese Aufgabe mit den Merkmalen des Anspruchs 2 dadurch gelöst, daß in einer der Einheiten zentral für die restlichen Einheiten die Netzwerkschichten eines zweiten Netzwerkes sowie eine zugehörende Anwendungsschnittstelle, eine sogenannte API, vorgesehen sind, während für jede der restlichen Einheiten ein sogenannter Proxy-Rechner vorgesehen ist.

Durch die erfindungsgemäße Maßnahme, nur in einer der Einheiten des ersten Netzwerkes die Netzwerkschichten des zweiten Netzwerkes und eine API, dagegen in den restlichen Einheiten nur wenig technisch aufwendige Proxy-Rechner zu installieren, wird der technische Aufwand beträchtlich verringert, ohne daß dadurch die Kommunikation mit dem zweiten Netzwerk beeinträchtigt wird.

Ein erstes Ausführungsbeispiel der Erfindung sieht als erstes Netzwerk ein MOST-Netzwerk eines Kraftfahrzeuges und als zweites Netzwerk das Internet vor.

Bei einem zweiten Ausführungsbeispiel der Erfindung ist das MOST-Netzwerk mit einem Telefon ausgerüstet, in welchem die Netzwerkschichten des Internets und die API installiert sind. Für diese Funktion ist das Telefon des MOST-Netzwerkes am besten geeignet, weil es eine Sende- und Empfangseinheit für die Kommunikation nach außen darstellt. In den anderen Einheiten des MOST-Netzwerkes ist je ein Proxy-Rechner installiert.

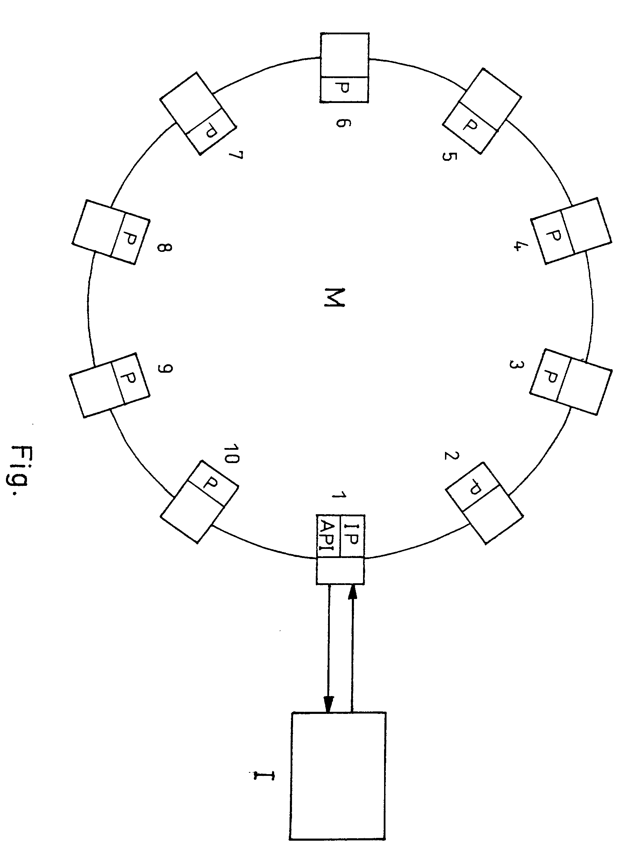

In der Figur sind ein MOST-Netzwerk mit mehreren Einheiten 1 bis 10 sowie das Internet I dargestellt. In der Einheit 1, z.B. einem Telefon sind die Netzwerkschichten IP und die Anwendungsschnittstelle API installiert, während in den restlichen Einheiten 2 bis 10 je ein Proxy-Rechner P installiert ist.

Besonders vorteilhaft ist es, auf der ohnehin vorhandenen Hardware der Einheiten die Proxy-Rechner in Form von Software zu installieren, weil hierzu kein zusätzlicher Aufwand an Hardware erforderlich ist.

Das erfindungsgemäße Verfahren und das erfindungsgemäße Netzwerk sind nicht auf den Einsatz in einem MOST-Netzwerk beschränkt, sondern lassen sich in jedem Netzwerk realisieren. Infolge des geringen technischen Aufwandes sind das erfindungsgemäße Verfahren und das erfindungsgemäße Netzwerk zum Einbau in ein Kraftfahrzeug besonders gut geeignet.

### Bezugszeichenliste

- API: API
- IP: Internet Protocol
- I: Internet
- M: MOST-Netzwerk
- P: Proxy-Rechner
- 1: Telefon
- 2-10: Einheit

## Patentansprüche

1. Verfahren zur Kommunikation zwischen einem mehrere Einheiten (1 bis 10) miteinander vernetztenden ersten Netzwerk (M) und einem zweiten Netzwerk (I),
**dadurch gekennzeichnet, daß** in einer der Einheiten (1) des ersten Netzwerkes (M) zentral für die restlichen Einheiten (2 bis 10) die Netzwerkschichten (IP) des zweiten Netzwerkes (I) sowie eine zugehörende Anwendungsschnittstelle (API) - eine sogenannte API - implementiert werden, während in den restlichen Einheiten (2 bis 10) sogenannte Proxy-Rechner (P) installiert werden.

2. Netzwerk (M), das mehrere Einheiten (1 bis 10) miteinander vernetzt,
**dadurch gekennzeichnet, daß** in einer der Einheiten (1) zentral für die restlichen Einheiten (2 bis 10) die Netzwerkschichten (IP) eines zweiten Netzwerkes (I) sowie eine zugehörende Anwendungsschnittstelle (API), eine sogenannte API, vorgesehen sind, während für jede der restlichen Einheiten (2 bis 10) ein sogenannter Proxy-Rechner (P) vorgesehen ist.

3. Verfahren oder Netzwerk nach Anspruch 1 oder 2,
**dadurch gekennzeichnet, daß** das erste Netzwerk ein MOST-Netzwerk ist und das zweite Netzwerk das Internet (I) ist.

4. Verfahren oder Netzwerk nach Anspruch 1, 2 oder 3,
**dadurch gekennzeichnet, daß** die Einheit (1) mit den Netzwerkschichten (IP) des zweiten Netzwerkes (I) und der API (API) ein Telefon ist.

5. Verfahren oder Netzwerk nach einem der vorangehenden Ansprüche,
**dadurch gekennzeichnet, daß** die Proxy-Rechner (P) in Form von Software installiert werden bzw. sind.
